(19) Europäisches Patentamt
European Patent Office
Office européen des brevets

(11) **EP 2 958 415 B1**

(12) **EUROPEAN PATENT SPECIFICATION**

(45) Date of publication and mention
of the grant of the patent:
**27.07.2016 Bulletin 2016/30**

(21) Application number: **14721814.3**

(22) Date of filing: **29.04.2014**

(51) Int Cl.:
**A01C 1/06** *(2006.01)*     **A01N 63/00** *(2006.01)*

(86) International application number:
**PCT/EP2014/058759**

(87) International publication number:
**WO 2014/177583 (06.11.2014 Gazette 2014/45)**

(54) **SEED COATING CONTAINING MINERAL PARTICLES AND DRIED MICROORGANISMS**

SAMENBESCHICHTUNG MIT MINERALTEILCHEN UND GETROCKNETEN MIKROORGANISMEN

ENROBAGE DE SEMENCE CONTENANT DES PARTICULES MINÉRALES ET DES MICRO-ORGANISMES SECS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.05.2013 EP 13166268**

(43) Date of publication of application:
**30.12.2015 Bulletin 2015/53**

(73) Proprietor: **Globachem NV
3800 Sint-Truiden (BE)**

(72) Inventor: **CLAES, Francis
3800 Sint-Truiden (BE)**

(74) Representative: **LC Patents
Kempische Steenweg 542A
3500 Hasselt (BE)**

(56) References cited:
**EP-A1- 0 097 459     EP-A2- 0 192 342
WO-A1-99/57959     WO-A2-2009/060012
US-A- 4 251 952     US-A- 6 156 699**

**Description**

FIELD OF THE INVENTION

The present invention relates to a method for coating a seed, said method comprising applying a mineral-containing layer comprising mineral particles and an aqueous binder to said seed, wherein the weight ratio of said aqueous binder to said mineral particles is lower than 0.4; and applying a microbial layer comprising dried microorganisms to said mineral-containing layer, while said mineral-containing layer is still tacky. In addition, the present invention provides coated seeds containing mineral particles and dried microorganisms.

BACKGROUND TO THE INVENTION

It is well-known that certain microorganisms when present in the soil in the vicinity of the seeds of particular plants, can function symbiotically with the seeds in a number of ways to improve e.g. the growth of the plants, or the control of certain pests. Among the best-known examples of such a symbiotic relationship is the one between leguminous plants and bacteria of the genus *Rhizobium* and *Bradyrhizobium.* Nitrogen fixation by these plants is only possible due to the presence of these bacteria, which form nodules on the roots of the legumes. Nonetheless, several other microorganisms are also known to be beneficial when located near the seed or plant environment.
Microorganisms to be used in the treatment of seeds may be applied to the seed environment in a variety of ways. Generally, the bacteria may be applied directly to the soil, seeds may be inoculated with the microorganisms immediately prior to sowing, or seeds may be coated with microorganisms well before sowing. One of the main difficulties encountered when using the last approach is that most of the microorganisms die during the coating process.
To coat seeds with microorganisms, most of the processes comprise the steps of making a slurry containing dried or non-dried microorganisms, applying the slurry to the seeds and drying the coated seeds. Such a method, which generates seeds with microorganisms in the coating itself, is e.g. described in EP0818135. Another example of this approach is described in EP0097459, wherein microorganisms are added so that they are about in the middle of a coating comprising a binder and filler. However, it is found that the presence of the microorganisms in the aqueous slurry negatively impacts their survival. Furthermore, extensive drying times are necessary for these types of application, e.g. 1.5 hours as described in EP0097459, which is energy-consuming and negatively impacts viability of the seed as well as the microorganisms.
Another option is to apply e.g. dried microorganisms to dry coated or non-coated seed. For example, US6156699 discloses alfalfa seeds that are sprayed with a mixture containing binder, limestone powder, surfactant, dye, a suspending agent and 30.3 weight percentage water. After addition of finely ground silica, the seeds are dried by a heated airstream before application of a powder containing Rhizobium bacteria. A study of Brockwell et al. (Crop and Pasture Science, 1962, 13(4): 638-649) compared such an approach with the above-described slurry method. They found that incorporation of the microorganisms in the coating led to a higher viability and stability of the inoculant than the external application.
Yet another option is to coat seeds with a binder and apply compositions containing dried organisms directly thereto. For example, EP0192342 discloses a dried bran carrier that is mixed with dried microorganisms that is applied to gum-coated seeds. EP0192342 is silent about the presence of minerals, let alone mineral particles. EP0494802 concerns the application of particles containing polymerized polysaccharides and dried microorganisms to seeds coated with an adhesive. US5041290 applies ascospore powder to adhesive-coated seeds.
Nonetheless, there remains a need for novel methods for coating seeds, which result in a higher viability and stability of the microorganisms and that require less time and (drying) energy.

SUMMARY OF THE INVENTION

In a first aspect, the present invention provides a method for coating seeds, said method comprising

- applying a mineral-containing layer comprising mineral particles and an aqueous binder to said seed, wherein the weight ratio of said aqueous binder to said mineral particles is lower than 0.4, and
- applying a microbial layer comprising dried microorganisms to said mineral-containing layer, while said mineral-containing layer is still tacky; to obtain a coated seed wherein the microbial layer is exterior to the mineral-containing layer.

In a particular embodiment, said mineral particles comprise one or more elements selected from the group consisting of loess, a kaolinite, a heulandite, a pyrophyllite, a calcite, a perlite, basalt, lava, cristoballite, and smectite. In another particular embodiment, said mineral particles have an average granular size below 90 micron. In yet another particular embodiment, the aqueous binder is a carbohydrate-containing aqueous binder. In a further embodiment, the mineral-containing layer has a pH of 6.5 to 8.5.

It has further been found that viability and stability of the microorganisms in the microbial layer can be further increased by application of a protecting layer on said microbial layer, wherein said protecting layer comprises a carbohydrate-containing aqueous binder and a protectant. Furthermore, the coating process may further comprise applying a top layer comprising an inert substance. In another embodiment, the coated seed may be dried.

In addition, the present invention provides a coated seed obtainable by the coating methods of the invention. In a particular embodiment, the present invention provides a coated seed comprising:

- a mineral-containing layer comprising mineral particles and a binder, wherein the weight ratio of said binder to said mineral particles is lower than 0.2, and wherein said mineral particles comprise one or more elements selected from the group consisting of loess, a kaolinite, a heulandite, a pyrophyllite, a calcite, a perlite, basalt, lava, cristoballite, and smectite;
- a microbial layer exterior to said mineral-containing layer; and
- a protecting layer exterior to said microbial layer, wherein said protecting layer comprises a carbohydrate-containing binder and a protectant.

The coated seed may further comprise a top layer comprising an inert substance.

DETAILED DESCRIPTION OF THE INVENTION

As described above, the invention provides a method for coating seeds, said method comprising

- applying a mineral-containing layer comprising mineral particles and an aqueous binder to said seed, wherein the weight ratio of said aqueous binder to said mineral particles is lower than 0.4, and
- applying a microbial layer comprising dried microorganisms to said mineral-containing layer, while said mineral-containing layer is still tacky.

The surprisingly low amount of binder still leads to a tacky mineral-containing layer onto which dried microorganisms can stick. The weight ratio of said aqueous binder to said mineral particles is preferably below 0.4. As will be discussed further herein, the application of such a low amount of binder to mineral particles leads to several advantages. It is particularly interesting to apply an as low amount of binder as possible that still leads to strong adherence of the mineral particles and maintains tacky properties of the mineral-containing layer. In a preferred embodiment, the weight ratio of aqueous binder to mineral particles, also known as the liquid-to-powder-ratio in the field of seed coatings, is below 0.3, in particular between 0.1 and 0.3. In a further embodiment, the ratio is below 0.25, more in particular below 0.2.

The present invention provides several advantages over the prior art. In particular, given the low amount of aqueous binder to the mineral particles, the mineral-containing layer is relatively dry, but still remains tacky to bind the microorganisms. Therefore, applied microorganisms are not rehydrated significantly by contacting the mineral-containing layer. In addition, without wanting to being bound by theory, it is the feeling of the inventors that the dry mineral particles in the mineral-containing layer further absorb moisture from the binder and the environment for a short moment after the mineral-containing layer has been formed. As such, the mineral particles in the mineral-containing layer aid further in preventing rehydration of the microorganisms, which results in higher viability and stability of the dried microorganisms after application to the seed.

Furthermore, it appears that the uneven surface of the mineral-containing layer on a microscopic level provides an improved environment for the microorganisms compared to binding them directly to the seed. The dried microorganisms can bind in the porous mineral particles or between the particles, thereby ensuring that they are not easily dislodged during transport and handling of the coated seeds, as well as that they are in an optimal environment for subsequent growth when they are planted in the soil.

In addition to the beneficial effects on the microorganisms, it has been found that the method of the invention is also advantageous towards the seeds. Due to the low amount of aqueous binder in the mineral-containing layer, also the seeds are not contacted with high moisture levels, such as is e.g. the case when the coating is applied as a slurry. Hydration of the seed often has a negative impact on the seed characteristics, especially when the seeds have been primed prior to coating. Primed seeds have been treated so that they will germinate quicker. However, even very low hydration of primed seeds may initiate germination processes in the seed. Therefore, the present invention, which applies a mineral-containing coating with a low amount of aqueous binder, is especially useful for coating primed seeds with dried microorganisms.

It has also been found that there is no need to perform an additional drying step prior to binding of microorganisms to the mineral-containing layer, thereby reducing energy and time consumption. Evidently, one can choose to add more aqueous binder or water (taking into account the amount of water the mineral particles can maximally absorb) when coating the seed with the mineral-containing layer and then applying a drying step to reduce the amount of aqueous binder to mineral particles below 0.4 prior to applying the dried microorganisms. This will result in the same type of mineral-containing layer and still applies a mineral-containing layer as described in the present invention. The application of the mineral particles and binder for the production of the mineral-containing layer may be performed immediately prior to the application of the dried microorganisms, optionally in the same drum. Therefore, all steps of the method of the invention may be performed in immediate consecutive steps in the same drum in the same coating device. This reduces the total time for coating the seeds with the dried microorganism to only a few minutes. It is even possible to perform the above-described method within a single minute (about 45 seconds for applying the mineral-containing layer and about 5-15 seconds to apply the dried microorganisms).

The skilled person is well aware on how to select mineral particles that can be used in the mineral-containing layer of the present invention, i.e. mineral particles that can be bound by a low amount of aqueous binder and that provide a layer that is still tacky so that it can bind the dried microorganisms. Therefore, mineral particles to be used in the present invention typically have low water absorption properties. Of particular interest are mineral particles that comprise on or more elements selected from the group consisting of loess, a kaolinite, a heulandite, a pyrophyllite, a calcite, a perlite, basalt, lava, cristoballite, and smectite. "Mineral" or "mineral particle" as used herein refers to a solid crystalline chemical element or compound that results from the inorganic processes of nature. Mineral particles are abiogenic. They are not to be confused with mineral nutrients or dietary minerals, which are archaic terms for dietary elements or nutrients. Dietary elements or nutrients describe chemical elements, but not actual minerals. Furthermore, dietary elements are not present as particles, but as (non-crystalline) salt forms. Hence, within the context of the present invention the term "mineral" or mineral particle" does not include mineral nutrients or dietary minerals, such as for example present as mineral ions in plant derived materials. Nonetheless, dietary elements or nutrients may be added to the coating composition in addition to mineral particles. Properties of minerals, including the minerals listed in this application, can be found e.g. in the Dana Classification (Dana's New Mineralogy, 8th Ed. by Gaines, Skinner, Foord, Mason and Rosenzweig; also available online at webmineral.com/danaclass.shtml). In a further embodiment, the mineral particles comprise silicate mineral particles, in particular phyllosilicate particles, more in particular clay mineral particles. The inventor identified that it may be beneficial to apply a mixture of two or more mineral particles. Therefore, the present invention also provides a method wherein said mineral particles comprise two or more elements selected from the group consisting of loess, a kaolinite, a heulandite, a pyrophyllite, a calcite, a perlite, basalt, lava, cristoballite, and smectite. It is preferred that the mineral particles do not negatively affect germination. In another preferred embodiment, the mineral particles have an average granular size below 150 micron, in particular below 100 micron, more in particular below 90 micron. In a further embodiment, the mineral particles have an average granular size below 60 micron. In another particular embodiment, the mineral particles have an average granular size above 1 micron, in particular above 5 micron, more in particular above 10 micron. Thus, in one embodiment, the mineral particles have an average granular size between 1 and 150 micron, in particular between 1 and 100 micron; more in particular between 1 and 90 micron. Thus, in another embodiment the mineral particles have an average granular size between 5 and 150 micron, in particular between 5 and 100 micron; more in particular between 5 and 90 micron. Thus, in one embodiment the mineral particles have an average granular size between 10 and 150 micron, in particular between 10 and 100 micron; preferably between 10 and 60 micron.

In another preferred embodiment, the mineral particles have a neutral pH, such as a pH between 6.5 and 8.5, in particular between 7.0 and 8.0. When using a mixture of different mineral particles, the pH of the mixture is preferably neutral. Thus, mixing different types of mineral particles aids in obtaining a neutral mixture when one of the mineral particles does not have a neutral pH. As different types of mineral particles also need different amounts of aqueous binder to be bonded strongly and still be tacky, mixing different types of mineral particles also aids in finetuning the amount of aqueous binder needed in the mineral-containing layer.

As an example only, a suitable mixture of mineral particles can exist of (in weight percentage):

- between 25-40% Loess,
- between 25-40% Kaolinite, and
- between 25-40% Calcite.

Typically, such a mixture will have a pH of about 7.8 and will optimally be bonded with an amount of binder of about 0.18 times the weight of the mineral particle mixture. This very low amount of binder still provides a tacky mineral-containing layer with strong adherence to the seed.

In principle, any aqueous binder can be used in the mineral-containing layer of the present invention. In a preferred embodiment, the aqueous binder in the mineral-containing layer is a carbohydrate-containing binder. Such a carbohydrate-containing binder has the added benefit that it provides a carbon source for the growth of the microorganisms upon hydration when planted. In a further preferred embodiment, the carbohydrate-containing binder is selected from the group consisting of a natural gum and a starch-derived product. Any water-soluble natural gum can be used, but of particular interest are gum arabic, gum ghatti, and xanthan gum; more in particular xanthan gum. Several aqueous binders are known that consist essentially of starch-derived products. In a particular embodiment, the starch-derived product is selected from the group consisting of a starch, a dextrin or a maltodextrin; more in particular a starch (such as tapioca) or a maltodextrin. In yet another embodiment, the aqueous binder is a natural product.

In one embodiment, the binder is present in 1-50% by weight of the aqueous solution. In particular from about 5-30%, more in particular from about 5-20%. Evidently, a mixture of binders can be used to obtain the aqueous binder. For example, if two binders are used, one of them is preferably present as 30-70% of the total amount of binder.

In another embodiment, the pH of the aqueous binder is neutral, such as a pH between 6.5 and 8.5, in particular about 7.0. In another particular embodiment, the pH of the mineral-containing layer is neutral, such as a pH between 6.5 and 8.5, in particular between 6.5 and 7.5, more in particular about 7.0. Therefore, it is possible to correct the pH of the mineral particles through the pH selection of the aqueous binder. For example, if the mineral particle mixture is basic, an acidic aqueous binder can be chosen, so that the final mineral-containing layer has a relatively neutral pH.

In addition to enabling sticking of the dried microorganisms to the seeds and improving their viability and stability, the mineral-containing layer has the added benefit of increasing the weight and size of the coated seeds. This allows for better handling of the coated seeds, for example in seed distribution devices. In a preferred embodiment, the mineral-containing layer is present in an amount of at least 10% (w/w) of the seed, more in particular at least 20% (w/w). In a further embodiment, the mineral-containing layer is present in an amount of 10% to 100% of the weight of the (uncoated) seed, more in particular 20% to 50%. Higher amounts of mineral-containing layer do not negatively influence the viability and stability of the microorganisms. Thus, an additional advantage of the present invention is that the amount of mineral-containing layer (and thus also the final volume and weight of the finished coated seeds) can be freely chosen, dependent on the preferred final weight and volume of the seeds. For example, Alfalfa seed may be coated with a mineral-containing layer weighing about 30% by weight of the seeds. On the other hand, the small seeds of tobacco plants may be coated with a mineral-containing layer of about 8000% of the weight of the seeds.

While most of the prior art coating methods require that the dried microorganisms are present on a carrier, such as bran or peat, the present invention can be used to coat seeds with any type of dried microorganisms. Thus, the dried microorganisms may be present on a carrier material, such as bran, peat or certain polymer matrices, but may also be present as such. For example, freeze-dried or oven-dried microorganisms or dry spores may be directly applied, without attaching them to a carrier first. Any beneficial microorganism can be coated with the methods of the present invention. Examples include microorganisms from the genus *Rhizobium, Enterobacter, Azospirillum, Pseudomonas, Xanthomas, Bradyrhizobium,* etcetera. The methods of the present invention are especially advantageous as they do not require rehydration of the dried microorganisms and/or their carrier prior to their application in the coating. In addition, the coating of the invention may comprise nutrients, preferably nutrients that can serve as a food source of the microorganisms once they are activated. Evidently, especially in the case of organic or carbohydrate-containing binders, the binder itself may also function as a growth source for the microorganisms once they are activated by rehydration. In another particular embodiment, the coating further comprises plant nutrients.

Unexpectedly, the inventors also found that the viability and stability of the dried microorganisms may further be improved by applying a protecting layer on said microbial layer, wherein said protecting layer comprises an aqueous binder and a protectant. The protectant may be a polyol, such as glycerol or propylene glycol. In a preferred embodiment, the aqueous binder in the protecting layer is a carbohydrate-containing binder or a wax. In a particular embodiment, the aqueous binder in the protective layer is a carbohydrate-containing binder, as described herein. In another particular embodiment, the aqueous binder in the protecting layer is a wax. Any water-dispersable wax can be used, in particular a natural wax, such as Carnauba wax. It is assumed that hydrophobic properties of waxes aid in preventing hydration of the dried microorganisms. However, surprisingly, the hydrophobicity has no negative effect on hydration upon sowing of the coated seeds. Preferably, the wax layer is put onto the seeds in such an amount that the film still contains pores to allow water and oxygen to get to the seeds and start the germination process. In a preferred embodiment, the wax is applied as an aqueous dispersion containing less than 20%, in particular less than 15%, wax. In a further embodiment, said aqueous wax dispersion in an amount of less than 100 ml, in particular less than 50 ml, per kg of seeds. In another embodiment, less than 20 g of wax (dry weight) is applied per kg of seeds, in particular less than 10 g, more in particular less than 5 g.

For example, an aqeous Carnaubawax disperion of 40% wax is diluted in water in a ratio of 1:10 to 1:20 so that a final aqueous coating dispersion of 4% to 8% of carnaubawax is achieved. From this dispersion 25 to 50ml is put onto 1 kg of seeds, depending on the thousand seed weight (TSW) and thus the total available surface of the seeds.

The coating method of the invention may further comprise applying a top layer comprising an inert substance. Addition of such a top layer prevents the coated seeds from sticking to each other, thereby increasing flowability. Examples of inert substances include organic or mineral substances, such as talc or mica. Inert substances can be chosen dependent on e.g. the desired look of the coated seeds. In a particular embodiment, the inert substance is applied in about 0.5% w/w of the coated seeds.

Optionally, the method of the present invention further comprises drying the coated seed. In case the coated seeds are dried, drying is preferably performed at relatively low temperatures to prevent damaging the microorganisms in the coating. Typical drying temperatures are between 15°C and 40 °C, preferably about 30 °C. A particular advantage of the present invention is that the low amount of aqueous binder in the mineral-containing layer and the low amount of moisture used throughout the method of the invention leads to a drying step that can be very short or even completely absent, despite the low drying temperature. Thus, the whole method to arrive to the dry, coated microorganism-containing seeds can be finished well within 15 minutes. It is assumed that this low time-frame wherein the microorganisms may be in contact with moisture is a major contributor to the observed high microorganism viability and stability.

Evidently, the coating methods of the present invention are compatible with several other coating techniques. Therefore, additional substances may be mixed in the coating layers of the invention, or applied between or on top of them. For example, coloring of seeds is regularly applied to differentiate different types of seeds from each other, to aid the planter in seeing the seeds and their distribution, and to lessen the appeal to seed-consuming animals, such as birds. Consequently, coloring agents may be added to e.g. the mineral-containing layer, the microbial layer, or the top layer. Evidently, preferred coloring agents do not have a negative impact on the survival, stability and subsequent growth of the microorganisms. Similarly, fertilizers may be used in the seed coatings to increase the growht of the plant or the microorganisms. In addition, chemical substances known to protect the seed or plant from pests may be added in the seed coatings. Preferred chemical substances do not have a negative impact on the survival, stability and subsequent growth of the microorganisms. Thus, the methods of the present invention may further comprise adding one or more additives to the coated seed. In particular, these additives are selected from the group consisting of a coloring agent, a fertilizer, and a pest-protecting agent.

Viewed from a second aspect, the present invention provides a coated seed obtainable by the methods described herein. Coated seeds of the invention comprise at least a mineral-containing layer as described herein and a microbial layer comprising dried microorganisms applied thereto. As the finished coated seeds have typically been dried, the weight of the binder in the mineral-containing layer will typically be lower than at the application time. For example, when applying an aqueous binder in a weight ratio of 0.4 compared to the mineral particles, the dried finished seed may contain an amount of 0.2 or even lower by weight compared to the mineral particles. In a further embodiment, the weight ratio of the binder to the mineral particles is lower than 0.15, more in particular lower than 0.10. In another embodiment, the weight ratio of the binder to the mineral particles is between 0.01 and 0.15, in particular between 0.03 and 0.10.

In a further particular embodiment, the coated seeds of the invention comprise

- a mineral-containing layer comprising mineral particles and a binder, wherein the weight ratio of said binder to said mineral particles is lower than 0.2, and wherein said mineral particles comprise one or more elements selected from the group consisting of loess, a kaolinite, a heulandite, a pyrophyllite, a calcite, a perlite, basalt, lava, cristoballite, and smectite;
- a microbial layer exterior to said mineral-containing layer; and
- a protecting layer exterior to said microbial layer, wherein said protecting layer comprises a carbohydrate-containing binder and a protectant.

The coated seed of the invention may further comprise a top layer comprising an inert substance.

As an example only, a typical coating process according to the invention may consist of the following steps:

- Preparation of an aqueous binder, such as 16.5% xantan gum, 15% maltodextrin, or a combination of 6.5% xanthan gum and 10% maltodextrin;
- Obtaining mineral particles, e.g. kaolinite particles, calcite particles, loess particles, or a combination thereof;
- Optionally coating the seeds with an initial, minimal amount of aqueous binder;
- Applying a mineral-containing layer to the seeds by simultaneous addition of mineral particles and aqueous binder until the mineral-containing layer has the desired thickness. Application of the mineral-containing layer takes on average between 45 and 300 seconds.
- Immediately subsequently, dried microorganisms are added as a powder. The dried microorganisms stick to the tacky mineral-containing layer. As the number of seeds and the number of colony-forming units (CFU) of microorganisms in the powder is typically known, the amount of powder can be adapted to the desired final CFU count per coated seed. Typical dosing times are between 5 and 15 seconds.
- A protecting layer may be applied, e.g. consisting of a mixture containing 80% of the above-described aqueous binder and 20% glycerol or propylene glycol. Typical dosing times are between 3 and 5 seconds.
- A topping layer may be applied, consisting for example of mica or talc at about 0.5% by weight compared to the seed. Typical dosing times are between 5 and 15 seconds.
- Seed coating may be finished with a final drying step. Suitable temperatures are between 15 and 40 °C. Typical drying time is between 180 and 300 seconds.

Throughout the above method, the weight ratio of the aqueous binder to the mineral particles is kept below 0.4

As can be seen from the above, the complete process, including addition of a protecting layer, a top layer and drying, may be finished within less than 5 minutes. Advantageously, the present invention can be performed in standard coating or pelleting devices that are currently used in the field.

EXAMPLES

Different coatings according to the present invention were tested. The prior art method of applying an aqueous binder to a seed (i.e. without mineral particles) and applying directly thereon the dried microorganisms was used as a comparative standard. In addition, a coating method was used wherein mineral particles are applied to the seeds with water only (i.e. without a binder) prior to the addition of dried microorganisms.

Binder mixes used for all samples:

Xanthan mix: 16,5% gum + 83,5% water
Tapioca mix: 15% tapioca starch + 85% water

Combination of xanthan + tapioca = 50% Xanthan mix + 50% Tapioca mix

All samples were prepared in a rotary seed treater

**Sample Xanthum gum:** 200 grams of seeds were wetted with 6 grams of Xanthan mix. Then 3 grams of dried Rhizobium inoculant was added on the tacky surface, followed with 1 ml of Xanthan mix to get a good fixation. After this, 2 grams of talc was added for free flowing of the seeds. Total batch time was 45 seconds.

**Sample Mineral* + water:** 200 grams of seeds were wetted with 5 ml of water. Then 60 grams of bentonite was added and fixed onto the seeds with 11 ml of water to obtain a sticky surface. After this, 3 grams of dried Rhizobium inoculant was added onto the surface. The process was finished with 2 grams of talc. Total batch time was 120 seconds.

**Sample Mineral** + binder:** 200 grams of seeds were wetted with 5 grams of binder mix. When the seeds were tacky, the mineral dosing started and 60 grams of mineral was put onto the seeds with 11 grams binder mix. Then 3 grams of dried Rhizobium inoculant was added onto the tacky surface, followed by 1 gram of binder mix. Then 2 grams of talc was added to finish the process. Ratio of kaolinite/loess/calcite in the mineral component was 1/3 - 1/3 - 1/3. Total batch time was 120 seconds.

**Sample Mineral** + binder + protective layer:** same protocol as above, wherein 1 gram of binder mix after adding the inoculant was replaced by the protective mix. Protective mix was in both cases the mentioned binder mix to which 10% glycerol was added. Total batch time was 120 seconds.

All samples were dried to a moisture content of less than 10%.

**Determination of CFU:** CFU was determined 4 days after treatment, after storing the samples under warehouse conditions. CFU was determined by extracting the bacteria in a buffer solution. This buffer solution was diluted and the dilution was inoculated onto a Rhizobium compatible agar medium. After 72 hours incubation, colonies were counted.

Example 1

In this experiment, alfalfa seeds were coated with dried *Rhizobium.* For comparison, seeds were coated according to the prior art, i.e. using only a binder (in this case xanthan gum) to coat the seed and applying dried microorganisms thereto. Also for comparative purposes, mineral particles were bonded to the seeds with water, after which dried microorganisms were applied. Bentonite was chosen because, when applied together with water, it adheres well to the seeds and provides a tacky layer whereto dried microorganisms can stick. Other seed coatings were produced using the methods according to the invention.

Mineral-containing layers (i.e. water-bound as well as binder-bound) were applied at 30% by weight of the seed. 0.3 kg of mineral particles and 0.085 kg of binder solution was applied to 1 kg of seed. Thus, the weight ratio of aqueous binder to mineral particles was 0.283.

The protecting layer, if present, was applied at 0.5 % of the uncoated seed weight.

CFU per seed was determined as described above. Values in the table are the average of two replicates.

| Seed coating | av. CFU/seed |
|---|---|
| Xanthan gum | 880 |
| Mineral particles* + water | 300 |
| Mineral particles** + tapioca | 6200 |
| Mineral particles** + xanthan gum | 6800 |
| Mineral particles** + mix of xanthan gum and tapioca | 6220 |
| Mineral particles** + xanthan gum + protecting layer (xanthan gum + glycerol) | 6930 |
| *: Bentonite<br>**: Mix of kaolinite, calcite and loess | |

The results show that much higher CFU counts are obtained when the seeds are coated with the methods of the invention, compared to the prior art in which dried microorganisms are directly bonded with binder only. This underscores the protective effect of the mineral particles. The results further show the importance of adding a binder together with the mineral particles. In addition, when applying a protecting layer, CFU counts per seed increase even further.

Example 2

Seeds were coated as described in example 1. CFU counts were determined as described above.

| Seed coating | CFU/seed |
|---|---|
| Xanthan gum | 1405 |
| Mineral particles* + water | 935 |
| Mineral particles** + xanthan gum | 6110 |
| Mineral particles** + xanthan gum + protecting layer (xanthan gum + glycerol) | 7465 |
| *: Bentonite<br>**: Mix of kaolinite, calcite and loess | |

The results of example 2 confirm the results of example 1. Seeds coated according to the invention (binder + mineral particles) show much higher CFU counts. When applying a protecting layer on top of the dried microorganisms, CFU counts increase even further.

Example 3

Seeds were coated as described in example 1. CFU counts were determined as described above and represent the average of two replicates.

| Seed coating | av. CFU/seed |
|---|---|
| Xanthan gum | 990 |
| Mineral particles* + water | 585 |
| Mineral particles** + xanthan gum | 5095 |
| Mineral particles** + xanthan gum + protecting layer (xanthan gum + glycerol) | 6385 |
| *: Bentonite<br>**: Mix of kaolinite, calcite and loess | |

The results of example 2 confirm the results of the previous examples. Seeds coated according to the invention (binder + mineral particles) show much higher CFU counts. When applying a protecting layer on top of the dried microorganisms, CFU counts increase even further.

Example 4

Seeds were coated with different types of binders and CFU counts were determined as described above.

| Seed coating | CFU/seed |
|---|---|
| Xanthan gum | 2710 |
| Mineral particles** + polyvinylpyrrolidone | 2990 |
| Mineral particles** + xanthan gum | 7465 |
| **: Mix of kaolinite, calcite and loess | |

Example 5

Seeds were coated as described above, using the xanthan gum or tapioca mix as binder. The mineral particles used in the coating were either $CaCO_3$ or the above-described mixture of kaolinite, calcite and loess. Mineral particles were applied at 0.3 kg per kg uncoated seed. For the $CaCO_3$, 330 g binder was used per kg mineral particles (LPR = 0.33). 217 g binder was used per kg of the mineral particle mixture (LPR = 0.217).

| Seed coating | CFU/seed |
|---|---|
| $CaCO_3$ + xanthan gum | 1470 |
| $CaCO_3$ + tapioca | 1330 |
| Mixture kaolinite/calcite/loess + xanthan gum | 2430 |
| Mixture kaolinite/calcite/loess + tapioca | 2300 |

The results show the beneficial effect of the presence of mineral particles with a low LPR ratio in the coatings of the present invention.

Example 6

Seeds were coated as described in example 5, or using a modified protocol in which the sole difference was that the microorganisms were applied at the beginning of the coating method.

| Seed coating | CFU/seed |
|---|---|
| $CaCO_3$ + xanthan gum, microorg. at beginning | 960 |
| $CaCO_3$ + xanthan gum, microorg. appl. according to invention | 1470 |
| Mixture kaolinite/calcite/loess + xanthan gum, microorg. at beginning | 1600 |
| Mixture kaolinite/calcite/loess + xanthan gum, microorg. appl. according to invention | 2430 |

The results clearly show the unexpected increase in viability when the microorganisms are applied according to the invention, i.e. on the mineral-containing layer when said layer is still tacky, compared to the application at the beginning of the coating process.

**Claims**

1.    A method for coating a seed, said method comprising

> 1) applying a mineral-containing layer comprising mineral particles and an aqueous binder to said seed, wherein the weight ratio of said aqueous binder to said mineral particles is lower than 0.4, and
> 2) applying a microbial layer comprising dried microorganisms onto said mineral-containing layer, while said mineral-containing layer is still tacky;

to obtain a coated seed wherein the microbial layer is exterior to the mineral-containing layer.

2.  The method of claim 1, wherein said mineral particles comprise one or more elements selected from the group consisting of loess, a kaolinite, a heulandite, a pyrophyllite, a calcite, a perlite, basalt, lava, cristoballite, and smectite.

3.  The method of claim 1 or 2, wherein said mineral particles comprise two or more elements selected from the group consisting of loess, a kaolinite, a heulandite, a pyrophyllite, a calcite, a perlite, basalt, lava, cristoballite, and smectite.

4.  The method of any one of the previous claims, wherein said mineral particles have an average granular size below 90 micron.

5.  The method of any one of the previous claims, further comprising
drying the coated seed comprising the microbial layer between 180 and 300 seconds at a temperature between 15°C and 40°C.

6.  The method of any one of the previous claims, further comprising
drying the coated seed comprising the microbial layer at a temperature between 15°C and 40°C; wherein the method is performed in less than 15 minutes.

7.  The method of claim 5 or 6, wherein said mineral particles comprise one or more elements selected from the group consisting of loess, a kaolinite, a heulandite, a pyrophyllite, a calcite, a perlite, basalt, lava, cristoballite, and smectite.

8.  The method of any one of the previous claims, wherein said aqueous binder is a carbohydrate-containing aqueous binder.

9.  The method of claim 8, wherein said mineral-containing layer has a pH of 6.5 to 8.5.

10. The method of any one of the previous claims, further comprising

    3) applying a protecting layer onto said microbial layer, wherein said protecting layer comprises an aqueous binder and a protectant, such as glycerol or propylene glycol.

11. The method of any one of the previous claims, further comprising

    4) applying a top layer comprising an inert substance, such as talc or mica.

12. A coated seed obtainable by the method of any one of the previous claims.

13. A coated seed obtainable by the method of claim 10, the coated seed comprising

    - a mineral-containing layer comprising mineral particles and a binder, wherein the weight ratio of said binder to said mineral particles is lower than 0.4, preferably lower than 0.2, and wherein said mineral particles comprise one or more elements selected from the group consisting of loess, a kaolinite, a heulandite, a pyrophyllite, a calcite, a perlite, basalt, lava, cristoballite, and smectite;
    - a microbial layer exterior to said mineral-containing layer; and
    - a protecting layer exterior to said microbial layer, wherein said protecting layer comprises a carbohydrate-containing binder and a protectant.

14. The coated seed of claim 13, further comprising a top layer comprising an inert substance.

15. The coated seed of any one of claims 12 to 14, further comprising one or more additives.

16. The coated seed of claim 15, wherein the one or more additives are selected from the group consisting of a colouring agent, a fertilizer, and a pest-protecting agent.

**Patentansprüche**

1. Ein Verfahren zur Beschichtung eines Saatguts, wobei das Verfahren Folgendes umfasst:

    1) Anbringen einer mineralhaltigen Schicht aus Mineralteilchen und einem wässrigen Bindemittel für dieses Saatgut, wobei das Gewichtsverhältnis zwischen dem wässrigen Bindemittel und den Mineralteilchen unter 0,4 liegt, und
    2) Anbringen einer mikrobiellen Schicht aus getrockneten Mikroorganismen auf der mineralhaltigen Schicht, wobei die mineralhaltige Schicht nach wie vor klebrig ist;

    um ein beschichtetes Saatgut zu erhalten bei dem sich die mikrobielle Schicht außerhalb der mineralhaltigen Schicht befindet.

2. Das Verfahren nach Anspruch 1, wobei die genannten Mineralteilchen ein oder mehrere aus der aus Löss, einem Kaolinit, einem Heulandit, einem Pyrophyllit, einem Kalzit, einem Perlit, Basalt, Lava, Cristoballit und Smektit bestehenden Gruppe gewählte Elemente umfassen.

3. Das Verfahren nach Anspruch 1 oder 2, wobei die genannten Mineralteilchen zwei oder mehrere aus der aus Löss, einem Kaolinit, einem Heulandit, einem Pyrophyllit, einem Kalzit, einem Perlit, Basalt, Lava, Cristoballit und Smektit bestehenden Gruppe gewählte Elemente umfassen.

4. Das Verfahren nach einem der vorherigen Ansprüche, wobei die genannten Mineralteilchen eine durchschnittliche Körnchengröße unter 90 $\mu$m aufweisen.

5. Das Verfahren nach einem der vorherigen Ansprüche, ferner umfassend das Trocknen des beschichteten Saatguts mit der mikrobiellen Schicht zwischen 180 und 300 Sekunden bei einer Temperatur zwischen 15 °C und 40 °C.

6. Das Verfahren nach einem der vorherigen Ansprüche, ferner umfassend das Trocknen des beschichteten Saatguts mit der mikrobiellen Schicht bei einer Temperatur zwischen 15 °C und 40 °C,
   wobei das Verfahren in weniger als 15 Minuten angewendet wird.

7. Das Verfahren nach Anspruch 5 oder 6, wobei die genannten Mineralteilchen ein oder mehrere aus der aus Löss, einem Kaolinit, einem Heulandit, einem Pyrophyllit, einem Kalzit, einem Perlit, Basalt, Lava, Cristoballit und Smektit bestehenden Gruppe gewählte Elemente umfassen.

8. Das Verfahren nach einem der vorherigen Ansprüche, wobei das genannte wässrige Bindemittel ein kohlenhydrathaltiges wässriges Bindemittel ist.

9. Das Verfahren nach Anspruch 8, wobei die genannte mineralhaltige Schicht einen pH von 6,5 bis 8,5 aufweist.

10. Das Verfahren nach einem der vorherigen Ansprüche, ferner umfassend 3) das Anbringen einer Schutzschicht auf der genannten mikrobiellen Schicht, wobei die genannte Schutzschicht ein wässriges Bindemittel und ein Schutzhilfsmittel wie Glyzerin oder Propylenglykol umfasst.

11. Das Verfahren nach einem der vorherigen Ansprüche, ferner umfassend 4) das Anbringen einer Deckschicht aus einer trägen Substanz wie Talk oder Glimmer.

12. Ein beschichtetes Saatgut erhältlich nach dem Verfahren eines der vorherigen Ansprüche.

13. Ein beschichtetes Saatgut erhältlich nach dem Verfahren von Anspruch 10, wobei das beschichtete Saatgut Folgendes umfasst:

    - eine mineralhaltige Schicht aus Mineralteilchen und einem Bindemittel, wobei das Gewichtsverhältnis zwischen dem Bindemittel und den Mineralteilchen unter 0,4, bevorzugt unter 0,2 liegt, und wobei die genannten Mineralteilchen ein oder mehrere aus der aus Löss, einem Kaolinit, einem Heulandit, einem Pyrophyllit, einem Kalzit, einem Perlit, Basalt, Lava, Cristoballit und Smektit bestehenden Gruppe gewählte Elemente umfassen;
    - eine mikrobielle Schicht außerhalb der genannten mineralhaltigen Schicht, und
    - eine Schutzschicht außerhalb der genannten mikrobiellen Schicht, wobei die Schutzschicht aus einem kohlenhydrathaltigen Bindemittel und einem Schutzhilfsmittel besteht.

**14.** Das beschichtete Saatgut nach Anspruch 13, ferner umfassend eine Deckschicht aus einer trägen Substanz.

**15.** Das beschichtete Saatgut nach einem der Ansprüche 12 bis 14, ferner umfassend ein oder mehrere Additive.

**16.** Das beschichtete Saatgut nach Anspruch 15, wobei das eine oder die mehreren Additive aus der aus einem Färbemittel, einem Düngemittel und einem Schutzmittel gegen Schädlinge bestehenden Gruppe gewählt werden.

**Revendications**

**1.** Une méthode d'enrobage de semence, ladite méthode comprenant

1) l'application d'une couche contenant des minéraux formée de particules minérales et d'un liant aqueux à ladite semence, où le rapport de poids dudit liant aqueux par rapport aux dites particules minérales est inférieur à 0,4, et
2) l'application d'une couche microbienne comprenant des microorganismes séchés sur ladite couche contenant des minéraux pendant que cette dernière est encore poisseuse ;

afin d'obtenir une semence enrobée où la couche microbienne est à l'extérieur de la couche contenant des minéraux.

**2.** La méthode de la revendication 1 où lesdites particules minérales comprennent un ou plusieurs éléments sélectionnés dans le groupe comprenant le loess, une kaolinite, une heulandite, une pyrophyllite, une calcite, une perlite, le basalte, la lave, la cristoballite et la smectite.

**3.** La méthode de la revendication 1 ou 2, où lesdites particules minérales comprennent deux ou plusieurs éléments sélectionnés dans le groupe comprenant le loess, une kaolinite, une heulandite, une pyrophyllite, une calcite, une perlite, le basalte, la lave, la cristoballite et la smectite.

**4.** La méthode de l'une des revendications précédentes, où lesdites particules minérales ont une grosseur de grain moyenne inférieure à 90 microns.

**5.** La méthode de l'une des revendications précédentes, comprenant en outre le séchage de la semence enrobée comprenant la couche microbienne pendant 180 à 300 secondes à une température comprise entre 15°C et 40°C.

**6.** La méthode de l'une des revendications précédentes, comprenant en outre le séchage de la semence enrobée comprenant la couche microbienne à une température comprise entre 15°C et 40°C ;
la méthode étant appliquée en moins de 15 minutes.

**7.** La méthode de la revendication 5 ou 6, où lesdites particules minérales comprennent un ou plusieurs éléments sélectionnés dans le groupe comprenant le loess, une kaolinite, une heulandite, une pyrophyllite, une calcite, une perlite, le basalte, la lave, la cristoballite et la smectite.

**8.** La méthode de l'une des revendications précédentes, où ledit liant aqueux contient de l'hydrate de carbone.

**9.** La méthode de la revendication 8 où ladite couche contenant des minéraux a un pH de 6,5 à 8,5.

**10.** La méthode de l'une des revendications précédentes, comprenant en outre 3) l'application d'une couche de protection sur ladite couche microbienne, où ladite couche de protection comprend un liant aqueux et une substance de protection comme le glycérol ou le propylèneglycol.

**11.** La méthode de l'une des revendications précédentes, comprenant en outre 4) l'application d'une couche supérieure comprenant une substance inerte comme du talc ou du mica.

**12.** Une semence enrobée pouvant être obtenue par la méthode de l'une des revendications précédentes.

**13.** Une semence enrobée pouvant être obtenue par la méthode de la revendication 10, la semence enrobée comprenant

EP 2 958 415 B1

- une couche contenant des minéraux formée de particules minérales et d'un liant, où le rapport de poids dudit liant par rapport aux dites particules minérales est inférieur à 0.4, de préférence inférieur à 0,2, et où lesdites particules minérales comprennent un ou plusieurs éléments sélectionnés dans le groupe comprenant le loess, une kaolinite, une heulandite, une pyrophyllite, une calcite, une perlite, le basalte, la lave, la cristoballite et la smectite ;
- une couche microbienne extérieure à ladite couche contenant des minéraux ; et
- une couche de protection extérieure à ladite couche microbienne, où ladite couche de protection comprend un liant contenant de l'hydrate de carbone et une substance de protection.

14. La semence enrobée de la revendication 13, comprenant en outre une couche supérieure comprenant une substance inerte.

15. La semence enrobée de l'une des revendications 12 à 14, comprenant en outre un ou plusieurs additifs.

16. La semence enrobée de la revendication 15, où la sélection du ou des additifs se fait parmi le groupe comprenant un agent colorant, un engrais et un agent de protection contre des ravageurs.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0818135 A
- EP 0097459 A
- US 6156699 A

- EP 0192342 A
- EP 0494802 A
- US 5041290 A

**Non-patent literature cited in the description**

- **BROCKWELL et al.** *Crop and Pasture Science,* 1962, vol. 13 (4), 638-649

- **GAINES ; SKINNER ; FOORD ; MASON ; ROSEN-ZWEIG.** Dana's New Mineralogy